# EUROPÄISCHE PATENTSCHRIFT

(11) **EP 0 778 171 B1**
(45) Veröffentlichungstag und Bekanntmachung des Hinweises auf die Patenterteilung: **24.05.2000**
(21) Anmeldenummer: 96115436.6
(22) Anmeldetag: 26.09.1996
(51) Int. Cl.: B60J 7/22

(54) **Windschott für ein Cabriolet**
Wind barrier
Protection pour le vent

(30) Priorität: 06.12.1995 DE 19545405
(43) Veröffentlichungstag der Anmeldung: 11.06.1997
(73) Patentinhaber: Dr.Ing.h.c. F. Porsche Aktiengesellschaft, 70435 Stuttgart (DE)
(72) Erfinder: Aydt, Matthias, 71735 Eberdingen (DE); Stadler, Bernd, D-71287 Weissach (DE); Reuter, Dieter, D-71139 Ehningen (DE)

(56) Entgegenhaltungen:
- EP-A- 0 599 811
- DE-A- 3 923 558
- US-A- 4 890 876

## Beschreibung

Die Erfindung betrifft ein Windschott für ein Cabriolet nach dem Oberbegriff des Patentanspruchs 1.

Aus der gattungsbildenden DE 38 44 844 C2 geht ein Windschott für ein Cabriolet hervor, das hinter einer Sitzreihe angeordnet ist und in seiner Wirkstellung ein erstes, über die Sitze hinaus nach oben erstreckendes, über die gesamte Innenraumbreite verlaufendes aufrechtes Teil umfaßt, das mit seiner Unterkante etwa in Höhe der Gürtellinie endet und dort über Scharniere an ein etwa horizontales, eine Öffnung hinter den Sitzen nach oben abdeckendes zweites Teil angeschlossen ist.

Das erste Teil läßt sich bei Nichtgebrauch auf das zweite Teil abklappen und nach Lösen vom Aufbau in zusammengeklappter Stellung im Fahrzeug unterbringen. Ein derartig zusammengeklapptes Windschott benötigt jedoch relativ viel Stauraum im Fahrzeug.

Aufgabe der Erfindung ist es, ein Windschott der eingangs genannten Gattung so weiterzubilden, daß es bei Nichtgebrauch einfach und platzsparend im Fahrzeug untergebracht werden kann.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß sich das erfindungsgemäße Windschott besonders platzsparend zusammenfalten läßt. Dies wird dadurch erreicht, daß einerseits das zweite Teil zweiteilig ausgebildet ist, wobei die in Querrichtung nebeneinanderliegenden Teile in Wirkstellung lösbar aneinandergesetzt sind. Andererseits läßt sich das aufrechte Teil durch vorgesehene rastbare Gelenke in zwei Hälften zusammenlegen.

Bei Nichtgebrauch des Windschotts wird das aufrechte Teil nach hinten abgeklappt und danach werden beide Teile nochmals zusammengefaltet, wodurch ein besonders kompaktes Faltpaket erzielt wird, das sich problemlos selbst in Fahrzeugen mit wenig Stauraum unterbringen läßt.

Zwischen jedem Plattenabschnitt und dem angrenzenden unteren Rahmen des ersten Teils ist jeweils zumindest ein Scharnier vorgesehen. Im Ausführungsbeispiel sind jeweils zwei beabstandete Scharniere pro Plattenabschnitt angeordnet.

In der Wirkstellung sind die beiden angrenzenden Plattenabschnitte lösbar miteinander verbunden. Hierzu ist entweder ein lösbarer Reißverschluß oder eine lösbare Nut-Federverbindung vorgesehen. Beide Teile können sich auch bereichsweise überlappen.

Ein Ausführungsbeispiel der Erfindung ist in den Zeichnungen dargestellt und wird im folgenden näher beschrieben.

Es zeigen
- Fig. 1: eine perspektivische Teilansicht von schräg vorne auf ein Cabriolet mit einem ninter den Sitzen angeordneten Windschott in Wirkstellung,
- Fig. 2: eine perspektivische Teilansicht von schräg hinten auf das Windschott und den angrenzenden Aufbau,
- Fig. 3: einen Schnitt nach der Linie III-III der Fig. 2 in größerem Maßstab,
- Fig. 4: eine Teilansicht von hinten, teilweise im Schnitt auf die aufbauseitige Lagerung des Windschotts,
- Fig. 5: einen Schnitt nach der Linie V-V der Fig. 4,
- Fig. 6: einen Schnitt nach der Linie VI-VI der Fig. 4,
- Fig. 7: eine Ansicht von oben auf das zusammengefaltete Windschott,
- Fig. 8: einen Schnitt nach der Linie VIII-VIII der Fig. 2 durch das Rastgelenk und
- Fig. 9: einen Schnitt nach der Linie IX-IX der Fig. 1 in größerem Maßstab.

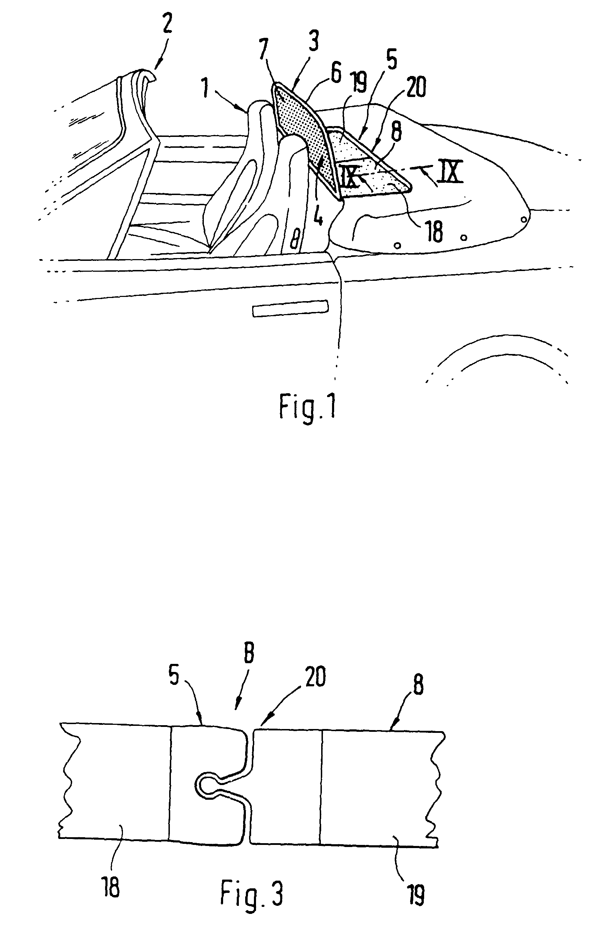

Wie aus Fig. 1 der Zeichnung zu entnehmen ist, ist hinter den Sitzen 1 des dargestellten Cabriolets 2 ein Windschott 3 angeordnet, das sich aus einem ersten aufrechten Teil 4 und einem zweiten, etwa horizontalen Teil 5 zusammensetzt, wobei das Teil 5, das den Fondraum hinter den Sitzen 1 nach oben hin abdeckt. Das erste aufrechte Teil 4 wird durch ein in einem Rahmen 6 aufgespanntes flexibles Netz 7 gebildet, wogegen das zweite Teil 5 als plattenförmige Abdeckung 8 ausgebildet ist.

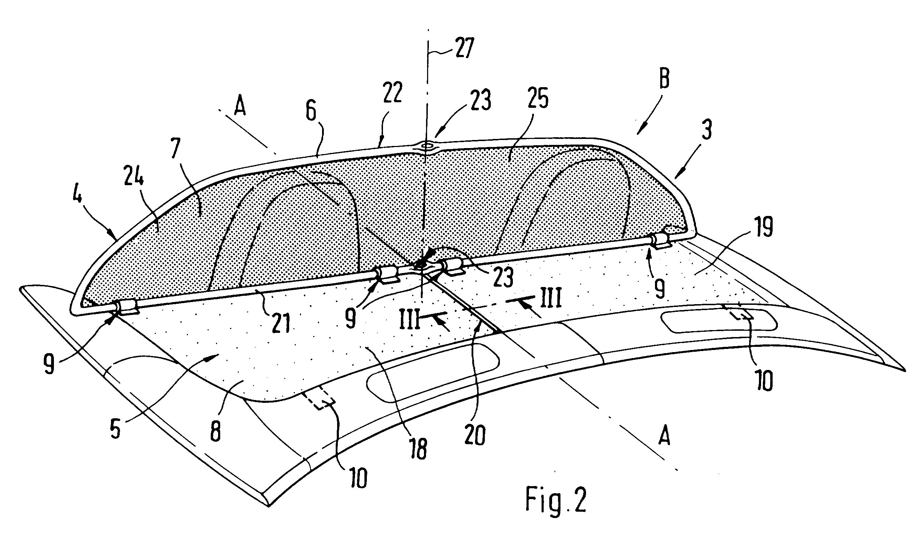

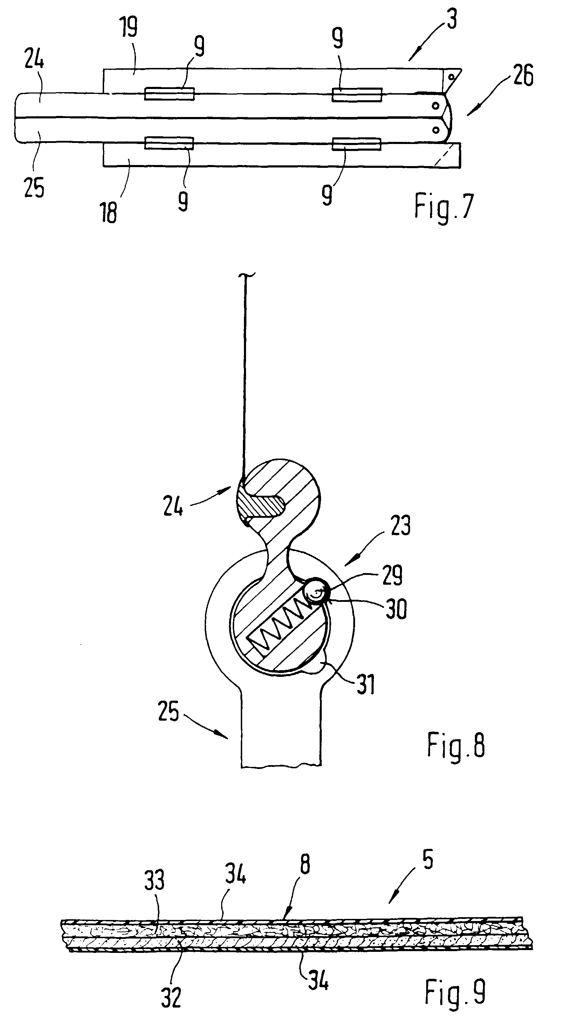

Gemäß Fig. 2 ist das erste aufrechte Teil 4 über Scharniere 9 schwenkbar mit der plattenförmigen Abdeckung 8 verbunden. Diese wird im Ausführungsbeispiel durch eine kaschierte Hartfaserplatte (Fig. 9) gebildet. Es besteht aber auch die Möglichkeit, die plattenförmige Abdeckung 8 als Kunststoffteil auszubilden, das an seiner Außenseite eine Narbung aufweist oder mit einem zusätzlichen Bezug versehen ist. Die plattenförmige Abdeckung 8 deckt Gepäckstücke, die sich auf der darunterliegenden nicht näher dargestellten Rücksitzanlage befinden, ab, so daß diese von oben her nicht sichtbar sind.

Entsprechend den Fig. 1 und 2 ist die plattenförmige Abdeckung 8 etwa in Höhe der Gürtellinie angeordnet und der Umfangskontur des Fondraumes angepaßt. Die plattenförmige Abdeckung 8 verhindert ein Eintreten von Luft in den darunterliegenden Bereich des Fondraumes.

Am hinteren querverlaufenden Rand der plattenförmigen Abdeckung 8 sind zwei vorstehende, sich in Fahrzeuglängsrichtung erstreckende Stecklaschen 10 angeordnet, die in nicht näher dargestellte angrenzende Gurtaustrittsöffnungen einsteckbar und in diesen in Lage gehalten sind.

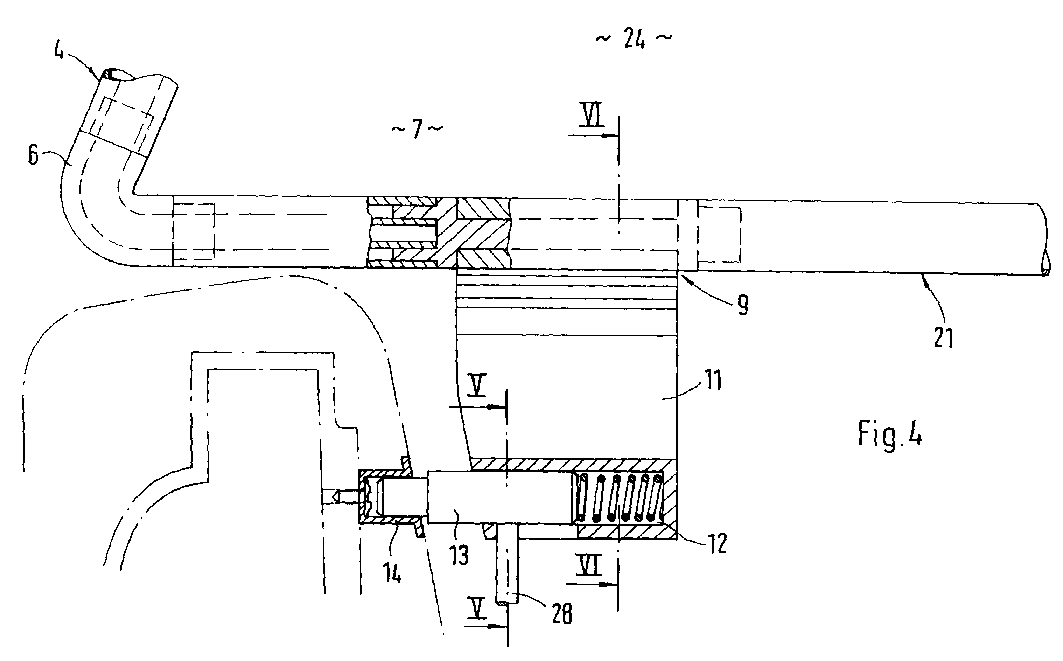

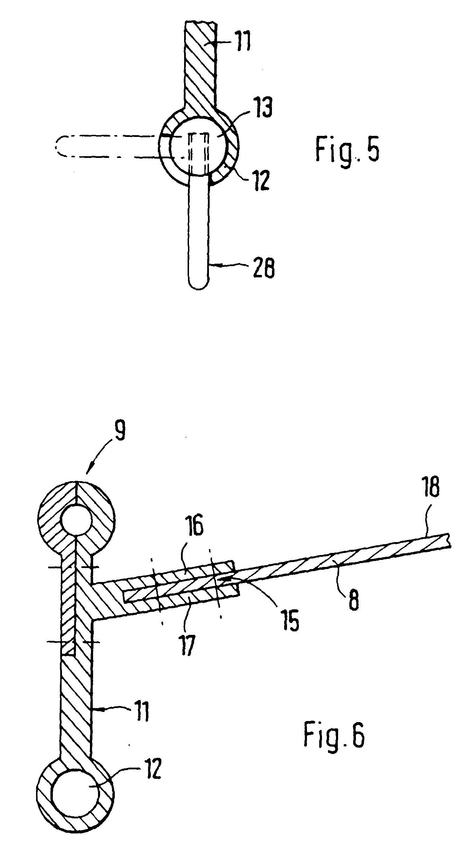

Im Bereich der seitlich außenliegenden Scharniere 9 ist ein erster Scharnierteil 11 nach unten geführt und weist dort eine Aufnahme 12 für einen sich in Fahrzeugquerrichtung erstreckenden federbelasteten Bolzen 13 auf, die bei montiertem Windschott 3 in ein aufbauseitiges Aufnahmeorgan 14 eingreift (Fig. 4). Der federbelastete Bolzen 13 ist mittels eines stiftförmigen Griffabschnitts 28 in Querrichtung und radialer Richtung verlagerbar (Fig. 4 und 5). Der vorstehende Griffabschnitt 28 ist fest mit dem Bolzen 13 verbunden. Ein einstückig mit dem aufrechten Scharnierteil 11 ausgebildeter U-förmiger Halteabschnitt 15 verläuft annähernd horizontal oder leicht schräg und nimmt zwischen Stegen 16, 17 das vordere Ende der Abdeckung 8 auf, wobei die Abdeckung 8 fest mit den Stegen 16, 17 verbunden ist.

Das erfindungsgemäße Windschott 3 läßt sich besonders platzsparend zusammenfalten, so daß es in diesem Zustand wenig Bauraum im Fahrzeug beansprucht.

Dies wird dadurch erreicht, daß zum einen die plattenförmige Abdeckung 8 zweiteilig ausgebildet ist. Die beiden Plattenabschnitte 18, 19 sind in Fahrzeugquerrichtung gesehen nebeneinanderliegend angeordnet, wobei der gemeinsame Verbindungsbereich 20 im Ausführungsbeispiel etwa im Bereich einer Fahrzeuglängsmittelebene A-A liegt.

In der Wirkstellung B des Windschotts 3 sind beide Plattenabschnitte 18, 19 lösbar miteinander verbunden. Dies kann durch ein Reißverschluß, eine Nut-Federverbindung oder eine partielle Überlappung erfolgen (Fig. 3).

Zum anderen ist im Bereich der Fahrzeuglängsmittelebene A-A am oberen und unteren querverlaufenden Rahmenabschnitt 21, 22 jeweils ein Rastgelenk 23 angeordnet, das den Rahmen 6 in zwei nebeneinanderliegende Hälften 24, 25 teilt.

Bei Nichtgebrauch des Windschotts 3 wird das erste aufrechte Teil 4 nach hinten auf das zweite Teil 5 abgeklappt. Danach lassen sich beide übereinanderliegenden Teile 4, 5 infolge der Rastgelenke 23 des Rahmens 6 und der lösbaren Verbindung der beiden Plattenabschnitte 18, 19 nochmals zusammenklappen. Die beiden Rastgelenke 23 sind über eine Achse 27 miteinander verbunden, um die die übereinanderliegenden Teile 4, 5 des Windschotts 3 nochmals zusammenklappbar sind.

Das in Fig. 7 dargestellte Faltpaket 26 setzt sich aus den innenliegenden Hälften 24, 25 des ersten Teils 4 und den außenliegenden Plattenabschnitten 18, 19 des zweiten Teils 5 zusammen. Es können Mittel zum Festlegen des Faltpakets 26 in der zusammengeklappten Stellung vorgesehen sein.

Fig. 8 zeigt das Rastgelenk 23 zwischen den Hälften 24, 25 des ersten Teils 4, wobei durch eine federbelastete Kugel 29 und zwei Rasten 30, 31 die Stellungen der Hälften 24, 25 in der Wirkstellung und der zusammengefalteten Stellung definiert sind.

In Fig. 9 ist der Aufbau der plattenförmigen Abdeckung 8 dargestellt. Die Oberseite der Hartfaserplatte 32 ist mit einer Wattierung 33 versehen. Die Außenseiten von Wattierung 33 und Hartfaserplatte 32 sind jeweils durch einen Bezug 34 aus Kunstleder oder Verdeckstoff verkleidet.

## Patentansprüche

1. Windschott (3) für ein Cabriolet (2), das hinter einer Sitzreihe angeordnet ist und in seiner Wirkstellung ein erstes, über die Sitze hinaus nach oben erstreckendes, über die gesamte Innenraumbreite verlaufendes aufrechtes Teil umfaßt, das mit seiner Unterkante etwa in Höhe der Gürtellinie endet und dort über Scharniere an ein etwa horizontales, eine Öffnung hinter den Sitzen (1) nach oben abdeckendes zweites Teil (5) angeschlossen ist, wobei das erste Teil (4) nach hinten auf das zweite (5) abklappbar ist, dadurch gekennzeichnet, daß im Bereich einer Fahrzeuglängsmittelebene (A-A) an einem oberen und einem unteren querverlaufenden Rahmenabschnitt (21, 22) des ersten Teils (4) jeweils ein Rastgelenk (23) angeordnet ist, das den Rahmen (6) des ersten Teils (4) in zwei nebeneinanderliegende Hälften (24, 25) teilt und daß das zweite Teil (5) durch zwei in Fahrzeugquerrichtung gesehen nebeneinanderliegende Abschnitte gebildet wird, deren gemeinsamer Verbindungsbereich (20) etwa im Bereich der Fahrzeuglängsmittelebene (A-A) liegt, so daß nach Abklappen des ersten Teils (4) auf das zweite Teil (5) die beiden übereinanderliegenden Teile (4, 5) nochmals um eine die beiden Rastgelenke (23) miteinander verbindende Achse (27) zusammenklappbar sind.

2. Windschott nach Anspruch 1, dadurch gekennzeichnet, daß die beiden Abschnitte des zweiten Teils (5) durch Plattenabschnitte (18, 19) gebildet werden, wobei in Fahrzeugquerrichtung gesehen nebeneinanderliegende Plattenabschnitte (18, 19) jeweils über zumindest ein Scharnier (9) mit einem unteren Rahmenabschnitt (21) des ersten Teils (4) gelenkig verbunden sind.

3. Windschott nach Anspruch 2, dadurch gekennzeichnet, daß die beiden Plattenabschnitte (18, 19) in der Wirkstellung (B) des Windschotts (3) im Bereich einer Fahrzeuglängsmittelebene (A-A) lösbar miteinander verbunden sind.

4. Windschott nach Anspruch 2, dadurch gekennzeichnet, daß jeder Plattenabschnitt (18, 19) durch eine kaschierte Hartfaserplatte (32) oder ein Kunststoffteil gebildet wird.

5. Windschott nach Anspruch 2, dadurch gekennzeichnet, daß die beiden Plattenabschnitte (18, 19) in der Wirkstellung (B) des Windschotts (3) über einen Reißverschluß, eine Nut-Federverbindung, eine bereichsweise Überlappung oder dergleichen aneinander angeschlossen sind.

## Claims

1. A wind break (3) for a cabriolet (2), arranged behind a row of seats and comprising in its operative position a first upright part which extends upwards beyond the seats and runs over the entire width of the inner space and which terminates with its lower edge substantially at the level of the waist line and is attached there by way of hinges to a substantially horizontal second part (5) covering an opening behind the seats (1) at the top, wherein the first part (4) can be folded down towards the rear onto the second part (5), **characterized in that** in the region of a longitudinal median plane **(A-A)** of the vehicle a catch joint (23) dividing the frame (6) of the first part (4) into two mutually adjacent halves (24, 25) is arranged in each case on an upper and a lower transversely extending frame portion (21, 22) of the first part (4), and the second part (5) is formed by two portions which are mutually adjacent when viewed in the transverse direction of the vehicle and the common connexion area (20) of which is situated substantially in the region of the longitudinal median plane **(A-A)** of the vehicle, so that after the first part (4) has been folded down onto the second part (5) the two superposed parts (4, 5) can be folded together once more about an axis (27) joining the two catch joints (23) to each other.

2. A wind break according to Claim 1, **characterized in that** the two portions of the second part (5) are formed by plate portions (18, 19), wherein plate portions (18, 19) which are mutually adjacent when viewed in the transverse direction of the vehicle are each connected in an articulated manner to a lower frame portion (21) of the first part (4) by way of at least one respective hinge (9).

3. A wind break according to Claim 2, **characterized in that** in the operative position **(B)** of the wind break (3) the two plate portions (18, 19) are detachably connected to each other in the region of a longitudinal median plane **(A-A)** of the vehicle.

4. A wind break according to Claim 2, **characterized in that** each plate portion (18, 19) is formed by a laminated hard-fibre plate (32) or a part of plastics material.

5. A wind break according to Claim 2, **characterized in that** in the operative position **(B)** of the wind break (3) the two plate portions (18, 19) are attached to each other by way of a zip fastener, a tongue-and-groove joint, a partial overlapping or the like.

## Revendications

1. Pare-vent (3) pour un cabriolet (2), qui est disposé derrière une rangée de sièges et qui, dans sa position active, comprend une première partie verticale qui s'étend vers le haut au-delà des sièges et sur toute la largeur de l'habitacle et qui se termine, par son bord inférieur, à peu près à hauteur de la ligne de ceinture et qui est raccordée à cet endroit par des charnières à une deuxième partie (5) à peu près horizontale qui recouvre vers le haut une ouverture située derrière les sièges (1), la première partie (4) pouvant être rabattue vers l'arrière sur la deuxième partie (5), caractérisé en ce que dans la zone du plan médian longitudinal (A-A) du véhicule est disposée, chacun des segments de cadre transversaux inférieur (21) et supérieur (22) de la première partie (4), une articulation à encliquetage (23) qui partage le cadre (6) de la première partie (4) en deux moitiés (24, 25) juxtaposées, et en ce que la deuxième partie (5) est formée par deux morceaux juxtaposés, vus dans la direction transversale du véhicule, dont la zone de liaison commune (20) se situe à peu près dans la région du plan médian longitudinal (A-A) du véhicule, de sorte qu'après rabattement de la première partie (4) sur la deuxième partie (5), les deux parties (4, 5) superposées peuvent encore être rabattues ensemble autour d'un axe (27) qui relie entre elles les deux articulations à encliquetage (23).

2. Pare-vent selon la revendication 1, caractérisé en ce que les deux morceaux de la seconde partie (5) sont formés par des morceaux de plaque (18, 19), chacun des morceaux de plaque (18, 19) juxtaposés, vus dans la direction transversale du véhicule, étant relié de manière articulée par au moins une charnière (9) à un segment de cadre inférieur (21) de la première partie (4).

3. Pare-vent selon la revendication 2, caractérisé en ce que les deux morceaux de plaque (18, 19) sont reliés entre eux de manière détachable dans la position active (B) du pare-vent (3), dans la zone du plan médian longitudinal (A-A) du véhicule.

4. Pare-vent selon la revendication 2, caractérisé en ce que chaque morceau de plaque (18, 19) est formé par un panneau doublé (32) de fibres dures ou par un élément en matière plastique.

5. Pare-vent selon la revendication 2, caractérisé en ce que les deux morceaux de plaque (18, 19) sont attachés l'un à l'autre, dans la position active (B) du pare-vent (3), par l'intermédiaire d'une fermeture à glissière, d'une liaison à rainure et languette, d'un chevauchement par endroits ou similaire.
